Europäisches Patentamt

**(19)** European Patent Office

Office européen des brevets

**(11)** Numéro de publication : **0 333 580 B1**

## **(12)** FASCICULE DE BREVET EUROPEEN

**(45)** Date de publication du fascicule du brevet :
**27.05.92 Bulletin 92/22**

**(51)** Int. Cl.$^5$ : **C03B 37/018,** C23C 16/00

**(21)** Numéro de dépôt : **89400701.2**

**(22)** Date de dépôt : **14.03.89**

**(54)** Dispositif de fabrication de préformes pour fibres optiques.

**(30)** Priorité : **16.03.88 FR 8803392**

**(43)** Date de publication de la demande :
**20.09.89 Bulletin 89/38**

**(45)** Mention de la délivrance du brevet :
**27.05.92 Bulletin 92/22**

**(84)** Etats contractants désignés :
**DE ES GB IT NL**

**(56)** Documents cités :
**DE-A- 3 222 189**
**FR-A- 2 575 151**
**OPTICAL FIBER COMMUNICATION CONFE-
RENCE AND SIXTH INTERNATIONAL CONFE-
RENCE ON INTEGRATED OPTICS AND
OPTICAL FIBERCOMMUNICATION TECHNI-
CAL DIGEST, Reno, Nevada, 19-22 janvier
1987, page 105, Optical Society of America,
Washington, D.C., US; P.CHOLLET et al.:
"TUQ10 model and rate constant determination for SPCVD fiber preform fabrication"
12TH EUROPEAN CONFERENCE ON OPTICAL
COMMUNICATION, Palacio de Congresos,
Barcelona, 22-25 septembre 1986, vol. 1,
pages19-22, Technical Digest, Palacio de
Congresos, Barcelona, SP; D. PAVY et al.:
"Fabrication of optical fiber preforms by a
newsurface-plasma CVD process"**

**(73)** Titulaire : **ETAT FRANCAIS représenté par le
Ministre des Postes, Télécommunications et
de l'Espace
(CENTRE NATIONAL D'ETUDES DES
TELECOMMUNICATIONS), 38-40 rue du
Général Leclerc
F-92131 Issy-les-Moulineaux (FR)**

**(72)** Inventeur : **Moisan, Monique
21 rue du Dauphiné
F-22300 Lannion (FR)**
Inventeur : **Pavy, Dominique
Impasse Marcelin Berthelot
F-22300 Lannion (FR)**
Inventeur : **Davoust, Marie-Eve
12 Allée des Cèdres
F-91240 Saint Michel sur Orge (FR)**
Inventeur : **Saada, Serge
47 Ter rue Gabriel Péri
F-94270 Kremlin Bicetre (FR)**
Inventeur : **Chollet, Patrick
Résidence Daunière - F.107
F-91940 Les Ulis (FR)**

**(74)** Mandataire : **Mongrédien, André et al
c/o BREVATOME 25, rue de Ponthieu
F-75008 Paris (FR)**

Jouve, 18, rue Saint-Denis, 75001 PARIS

## Description

La présente invention concerne un dispositif de fabrication de préformes pour fibres optiques. Elle s'applique notamment au domaine des télécommunications dans lequel les fibres optiques sont de plus en plus utilisées.

On connaît déjà par les documents suivants :
(1) FR-A-2 575 151
(2) FR-A-2 600 327
(3) Article de D. PAVY et al., intitulé "Fabrication of optical fiber preforms by a new surface-plasma CVD process" et publié dans Conference Proceedings ECOC'86, Barcelone (Espagne) 1986, pages 19 à 22,
auxquels on pourra se référer, un dispositif de fabrication de préformes pour fibres optiques qui met en oeuvre la technique de dépôt chimique en phase vapeur utilisant un plasma entretenu par des ondes progressives de surface. Ce dispositif permet de déposer sur la face interne d'un tube en verre, par exemple en silice, un revêtement vitreux destiné à la formation ultérieure du coeur des fibres optiques et conduit à des dépôts corrects en ce qui concerne le rendement et la pureté chimique.

Cependant, les dépôts obtenus peuvent présenter des défauts d'homogénéité en épaisseur.

La présente invention à pour but de remédier à cet inconvénient en proposant un dispositif perfectionné permettant d'améliorer cette homogénéité d'épaisseur.

A cet effet, le dispositif objet de l'invention comprend des moyens électroniques de régulation coopérant avec des moyens de photodétection pour obtenir une épaisseur uniforme de revêtement du tube.

Plus précisément, la présente invention a pour objet un dispositif de fabrication de préformes pour fibres optiques, comprenant des moyens pour déposer sur la face interne d'un tube en verre un revêtement vitreux destiné à la formation ultérieure du coeur des fibres optiques, ces moyens comprenant :
– des moyens pour faire passer continûment, d'une première extrémité du tube à la seconde extrémité de celui-ci, un mélange de composés gazeux ionisables et aptes à donner naissance au revêtement par réaction entre eux,
– un coupleur hyperfréquence situé du côté de la seconde extrémité du tube et prévu pour former dans ce tube une colonne de plasma destinée à activer la réaction, ce coupleur hyperfréquence étant apte à injecter une onde progressive de surface dans la colonne de plasma, et
– un générateur de micro-ondes à puissance variable, prévu pour fournir au coupleur hyperfréquence une puissance électromagnétique et pour faire varier continûment et progressivement cette puissance, de façon que l'extrémité de la colonne de plasma balaye le tube, le dépôt de revêtement vitreux ayant lieu, à un instant donné, dans une zone de dépôt qui émet une lumière caractéristique de la réaction et qui est située dans la colonne de plasma, au voisinage de l'extrémité de celle-ci, dispositif caractérisé en ce qu'il comprend en outre :
– des moyens de photodétection qui sont sensibles à cette lumière et qui sont aptes à fournir des informations relatives à la position de la zone de dépôt, et
– des moyens électroniques de régulation du déplacement de la zone de dépôt, ce déplacement étant tel que l'épaisseur du revêtement soit uniforme, les moyens de régulation étant prévus pour commander la puissance du générateur en fonction des informations fournies par les moyens de photodétection.

Le dispositif objet de l'invention comporte donc des moyens d'asservissement utilisant des informations optiques en vue d'obtenir une homogénéité longitudinale d'épaisseur des couches élémentaires de revêtement vitreux successivement déposés sur la face interne du tube en verre.

Certes, on connaît déjà, par le document (4) DE-A 3222189, un procédé de dépôt chimique en phase vapeur utilisant un plasma pour enduire intérieurement un tube constitué d'un matériau diélectrique. Le tube à enduire intérieurement est intégré dans un tube de métal coaxial à l'extrémité duquel se trouve un système coaxial destiné à moduler une onde de surface permettant d'entretenir une colonne de plasma. Des moyens de régulation compliqués comportant un interferomètre à micro-ondes, sont également prévus pour que la tête de la colonne de plasma se déplace à une vitesse constante le long du tube à enduire intérieurement.

Cependant, la présente invention utilise une régulation plus simple car elle fait intervenir non pas des moyens interférométriques mais des moyens optiques.

La présente invention s'applique notamment à la fabrication de préformes selon le procédé décrit dans le document (2), qui nécessite un tube très épais de silice sur la face interne duquel est déposé un revêtement vitreux.

De préférence, les moyens de photodétection sont fixes par rapport au coupleur hyperfréquence, sont prévus pour observer les positions successives de la zone de dépôt lorsque l'extrémité de la colonne de plasma balaye le tube et sont aptes à fournir des signaux électriques qui rendent compte de ces positions successives.

Dans ce cas, les moyens de photodétection peuvent comprendre un capteur linéaire photosensible disposé parallèlement à l'axe du tube et muni de moyens de filtrage optique prévus pour ne laisser passer que la lumière caractéristique de la réaction.

Alors, le dispositif objet de l'invention comprenant en outre un four qui est prévu pour porter le tube à une température au moins égale à 1000°C environ, ce four comporte de préférence une fente longitudinale permettant d'observer le déplacement de la zone de dépôt depuis l'extérieur du four, cette fente s'étendant parallèlement à l'axe du tube, et le capteur linéaire photosensible est muni d'une optique et placé en dehors du four, en regard de la fente et à une distance appropriée de celle-ci pour repérer lesdites positions successives.

Le capteur linéaire photosensible peut comprendre un seul élément photosensible du type capteur de position, où seule une petite zone de cet élément est excitée à la fois par la lumière caractéristique de la réaction.

De tels capteurs sont disponibles commercialement et fournissent directement une tension électrique analogique qui est proportionnelle à la position de la zone excitée de l'élément photosensible.

En variante, le capteur linéaire photosensible peut comprendre une pluralité d'éléments photosensibles, seul un groupe d'éléments photosensibles adjacents étant excité à la fois par la lumière caractéristique.

De tels moyens particuliers de photodétection, comprenant une pluralité d'éléments photosensibles, peuvent permettre, comme on le verra mieux par la suite, de connaître la largeur de la zone de dépôt à un instant donné et, par conséquent, d'effectuer la régulation de cette largeur de la zone de dépôt si besoin est.

Dans le cas d'un déplacement linéaire (c'est-à-dire à vitesse constante) imposé à la zone de dépôt, un maintien à une valeur constante de la largeur de cette zone de dépôt permet d'améliorer encore plus l'homogénéité de l'épaisseur du revêtement vitreux déposé.

Dans une réalisation particulière du dispositif objet de l'invention, le capteur linéaire photosensible comportant une pluralité d'éléments photosensibles est un capteur à transfert de charges qui est en forme de barrette.

En outre, lorsque le capteur linéaire photosensible comprend ladite pluralité d'éléments photosensibles, les moyens de régulation peuvent comprendre :

– des moyens de filtrage des signaux fournis par les moyens de photodétection,

– des moyens de détermination prévus pour repérer à partir de ces signaux filtrés, un élément photosensible d'extrémité pour chaque groupe successivement excité, et

– des moyens de traitement aptes à imposer au générateur de micro-ondes, à partir des éléments photosensibles d'extrémité ainsi repérés, une tension de commande dont l'évolution temporelle provoque le déplacement de la zone de dépôt conduisant à l'épaisseur uniforme de revêtement.

Les moyens de détermination peuvent comprendre :

– des moyens de conversion du signal lumineux correspondant à la lumière caractéristique, en une impulsion électrique rectangulaire dont la largeur temporelle du niveau haut est proportionnelle à la largeur à mi-hauteur dudit signal lumineux, et

– des moyens de comptage prévus pour déterminer ledit élément photosensible d'extrémité à partir de l'impulsion électrique rectangulaire.

Ces moyens de détermination peuvent en outre être prévus pour fournir une information permettant de déterminer la largeur de la zone de dépôt à un instant donné.

Alors, les moyens de détermination peuvent comprendre en outre d'autres moyens de comptage prévus pour déterminer le nombre d'éléments photosensibles du groupe excité, à partir de la largeur temporelle du niveau haut de l'impulsion rectangulaire.

Ladite régulation peut être une régulation en boucle fermée, les informations fournies par les moyens de photodétection étant traitées et comparées en permanence dans les moyens électroniques de régulation, à des informations de position initialement mémorisées dans ces moyens électroniques de régulation.

Inversement, ladite régulation peut être une régulation en boucle ouverte, les informations fournies par les moyens de photodétection étant utilisées au moins initialement par les moyens électroniques de régulation pour déterminer une série de tensions de commande appropriées du générateur de micro-ondes.

On peut également réaliser une régulation en boucle ouverte pour laquelle les informations fournies par les moyens de photodétection sont utilisées par les moyens électroniques de régulation pour rachaîchir périodiquement une série de tensions de commande du générateur de micro-ondes, mémorisée dans les moyens électroniques de régulation.

Enfin, les moyens électroniques de régulation peuvent être prévus pour permettre un déplacement de la zone de dépôt à vitesse constante.

La présente invention sera mieux comprise à la lecture de la description qui suit, d'exemples de réalisation donnés à titre purement indicatif et nullement limitatif, en référence aux dessins annexés sur lesquels :

– la figure 1 est une vue schématique d'un mode de réalisation particulier du dispositif objet de l'invention,

– la figure 2 illustre schématiquement, à un instant donné, la zone de dépôt de revêtement vitreux sur la face interne d'un tube en verre traité dans le dispositif représenté sur la figure 1, ainsi que la lumière caractéristique émise par cette zone de dépôt,

– la figure 3 est une vue schématique de moyens électroniques de régulation que comporte le dispositif représenté sur la figure 1,

– la figure 4 est un chronogramme de certains signaux utilisés dans ces moyens électroniques de régulation,

– la figure 5 illustre schématiquement le balayage linéaire du tube, par l'extrémité d'une colonne de plasma formée à l'intérieur de celui-ci grâce au dispositif représenté sur la figure 1, ainsi que les variations temporelles de la puissance fournie par un générateur de micro-ondes faisant partie de ce dispositif et permettant d'obtenir ce balayage linéaire,

– la figure 6 illustre schématiquement les variations de pression que l'on peut obtenir à l'intérieur du tube, du fait du dispositif représenté sur la figure 1, lorsque la colonne de plasma se déplace à l'intérieur de ce tube, et

– la figure 7 est une vue schématique de moyens électroniques de régulation utilisés dans un autre dispositif conforme à l'invention.

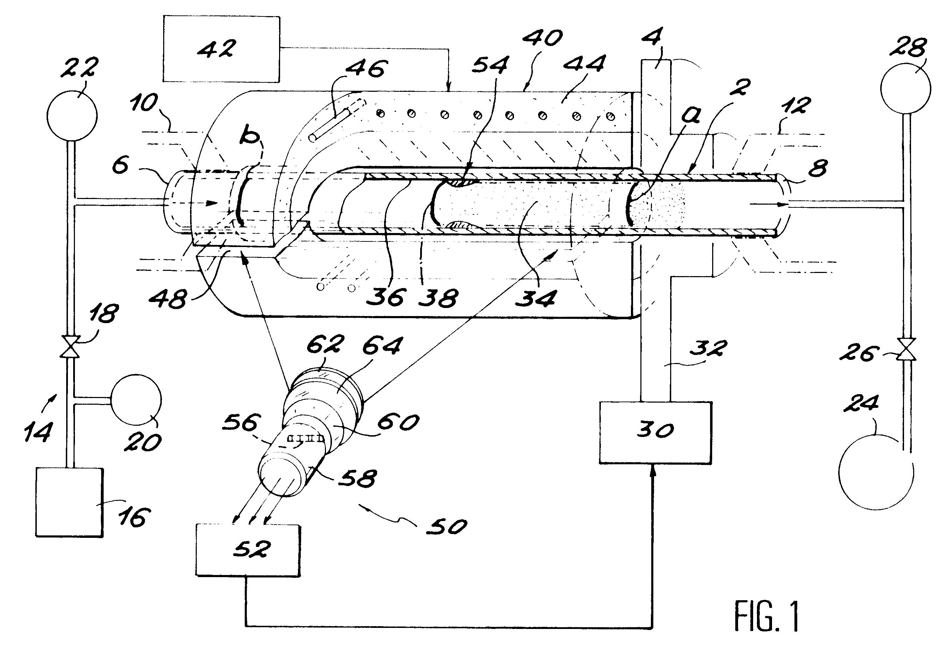

Le dispositif schématiquement représenté sur la figure 1 est destiné au dépôt d'un revêtement vitreux approprié sur la face interne d'un tube 2 en verre, par exemple en silice, en vue d'obtenir une préforme à partir de laquelle on formera des fibres optiques dont le coeur résultera dudit revêtement vitreux.

Ce dispositif est prévu pour réaliser un dépôt chimique en phase vapeur activé par un plasma engendré et entretenu par une onde progressive de surface et comporte à cet effet un coupleur hyperfréquence 4, par exemple du type SURFAGUIDE.

Les extrémités 6 et 8 du tube 2 sont respectivement maintenues par des embouts tubulaires 10 et 12. Le coupleur hyperfréquence 4 est disposé entre ces deux embouts, du côté de l'un d'entre eux qui porte la référence 12 dans l'exemple représenté sur la figure 1 et entoure ainsi le tube 2 près de l'une des extrémités de celui-ci. L'endroit où se trouve le coupleur 4 est avantageusement hors de la zone utile de dépôt du revêtement vitreux. Par ailleurs, le coupleur 4 est fixe par rapport aux embouts 10 et 12 : il ne se déplace pas parallèlement à l'axe du tube 2 au cours de l'opération de dépôt du revêtement vitreux à l'intérieur de ce tube 2.

Le dispositif représenté sur la figure 1 comprend également des moyens 14 prévus pour injecter à travers l'embout 10 -le plus éloigné du coupleur 4- un mélange gazeux approprié par exemple composé d'oxygène et de vapeur de tétrachlorure de silicium, si l'on souhaite obtenir un revêtement de silice pure, ou le mélange précédent additionné d'un dopant sous forme de fluor ou d'un dérivé de ce dernier, si l'on souhaite un revêtement de silice dopée au fluor. Un dopage à l'oxyde de germanium nécessiterait l'addition, au mélange en question, de traces de $GeCl_4$.

Les moyens d'injection 14 comprennent des moyens 16 aptes à fournir le mélange gazeux approprié sous une pression donnée et à envoyer celui-ci à l'extrémité 6 du tube 2, par l'intermédiaire d'une vanne 18 de réglage de débit. Des jauges 20 et 22 permettent de connaître la pression respectivement entre les moyens 16 et la vanne 18 et entre cette dernière et l'extrémité 6 du tube 2.

Le dispositif représenté sur la figure 1 comprend aussi des moyens 24 de pompage du mélange gazeux à l'autre extrémité 8 du tube 2, à travers l'embout 12 et par l'intermédiaire d'une vanne 26 de réglage d'aspiration des moyens de pompage 24 (ces derniers comprenant par exemple une pompe du genre de celle qui est connue sous le nom de pompe ROOTS). Une jauge 28 est aussi prévue pour connaître la pression entre l'extrémité 8 du tube 2 et la vanne 26.

Le dispositif représenté sur la figure 1 comprend en outre un générateur de micro-ondes à puissance variable 30 qui est destiné à alimenter le coupleur 4 par l'intermédiaire d'un guide d'onde 32. Ce générateur 30 peut être commandé extérieurement par une tension analogique variant entre 0 et 5V et, à titre purement indicatif et nullement limitatif, est disponible auprès de la société SAIREM.

Lorsque le mélange gazeux circule à l'intérieur du tube 2, une colonne de plasma 34 est formée à l'intérieur de ce tube grâce à l'onde progressive de surface engendrée par le coupleur 4. Le revêtement vitreux 36 est obtenu en modulant la puissance de générateur 30, ce qui provoque une variation alternative de longueur de la colonne 34 et donc un déplacement alternatif de l'extrémité ou front 38 de cette colonne entre deux zones de l'intérieur du tube 2 qui sont repérées par les lettres a et b sur la figure 1 et qui délimitent ladite zone utile de dépôt, la distance entre les zones a et b correspondant à la longueur sur laquelle on souhaite déposer le revêtement vitreux.

Le dépôt interne de silice dopée ou non dopée s'effectue au niveau du front de la colonne de plasma, de sorte qu'en un aller et retour dudit front dans le tube deux couches vitreuses élémentaires sont déposées à l'intérieur de ce tube, l'ensemble des couches élémentaires constituant le revêtement vitreux 36.

Ce dépôt interne de silice dopée ou non dopée s'effectue avec un rendement excellent de l'ordre de 100% pour $SiO_2$ et de 80% pour $GeO_2$.

Il faut porter l'intérieur du tube 2 où s'effectue le dépôt de revêtement vitreux à une température au moins égale à 1000°C environ, par exemple une température comprise entre 1000 et 1200°C. A cet effet, le dispositif représenté sur la figure 1 comprend un four 40 prévu pour chauffer au moins la zone utile du tube 2, les extrémités 6 et 8 de ce tube dépassant dudit four, ce dernier s'étendant ainsi entre le coupleur 4 et l'embout 10. Des moyens 42 sont prévus pour commander le four 40 afin que ce dernier soit à la température voulue.

Le four 40 comprend une enveloppe 44 et, à l'intérieur de celle-ci, deux séries d'éléments chauffants 46 s'étendant le long du four et placées de telle manière que, lorsque le tube est à l'intérieur du four, il soit compris entre ces séries d'éléments chauffants. Ces derniers se présentent sous la forme de barreaux régulièrement espacés les uns des autres et perpendiculaires à l'axe du four.

L'enveloppe 44 de ce four est fendue longitudinalement, une fente 48 étant ainsi réalisée sur cette enveloppe 44 parallèlement à l'axe du four, ce qui permet d'observer l'intérieur de ce dernier.

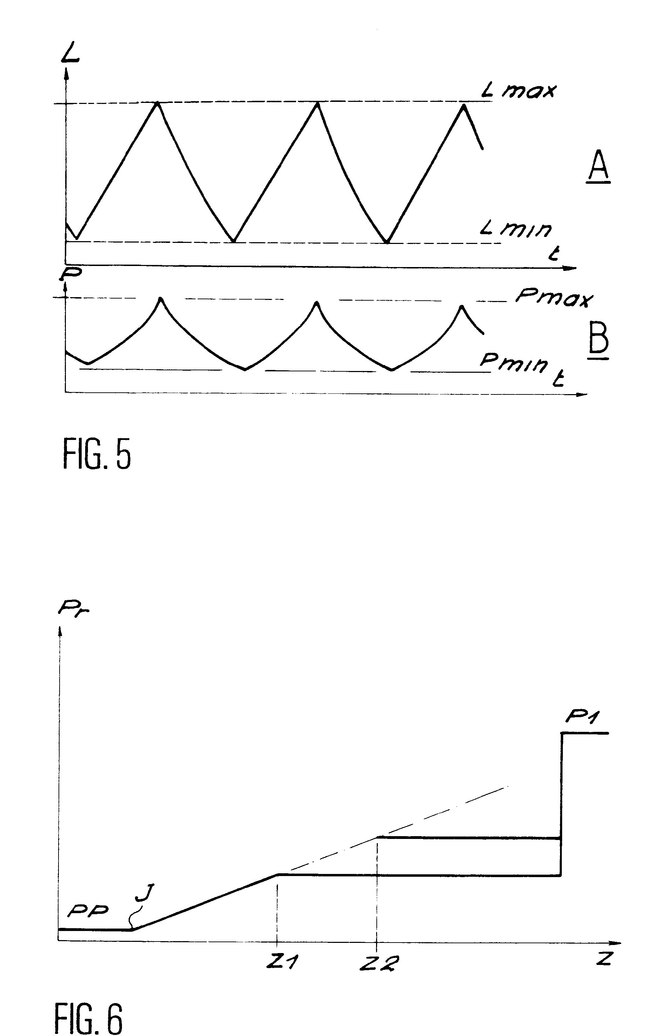

Dans l'exemple de réalisation représenté sur la figure 1, on cherche à obtenir un déplacement alternatif du front de la colonne de plasma 34 à vitesse programmée, par exemple à vitesse constante, entre les zones a et b. La longueur L de la colonne de plasma est ainsi une fonction périodique du temps t en dents de scie, qui varie entre une valeur minimale Lmin et une valeur maximale Lmax (voir figure 5-A).

Comme on le verra par la suite, le générateur de microondes 30 est commandé de façon appropriée pour fournir une puissance P qui varie avec la même période que la longueur L en fonction du temps t, entre une valeur minimale Pmin et une valeur maximale Pmax correspondant respectivement à Lmin et Lmax (voir figure 5-B).

Pour obtenir le déplacement à vitesse programmée, par exemple constante, du front de la colonne de plasma 34, le dispositif représenté sur la figure 1 comprend un capteur optique 50 placé à l'extérieur du four 40 et prévu pour observer au moins ladite zone utile du tube 2 lorsque celui-ci est placé à l'intérieur du four, et le dispositif représenté sur la figure 1 comprend aussi des moyens électroniques de régulation 52 qui sont prévus pour commander le générateur 30 en fonction de signaux fournis par le capteur optique 50, en vue d'obtenir le déplacement du front de la colonne de plasma 34 à vitesse programmée, par exemple constante, le long de l'axe du tube 2.

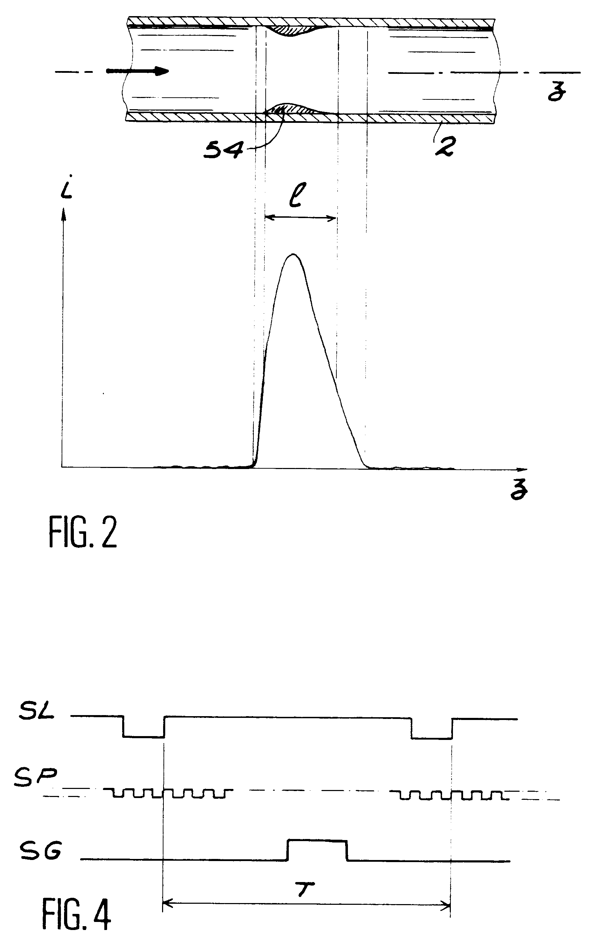

Sur la figure 2, on a représenté schématiquement une vue en coupe longitudinale du tube 2 suivant l'axe z de celui-ci. Le mélange gazeux circulant dans le tube interagit avec la colonne de plasma pour donner des espèces activées telles que Si ou SiO qui permettent la formation du revêtement vitreux. La zone de dépôt 54 vue en coupe longitudinale sur la figure 2 est située en front de colonne de plasma et effectue ainsi des va-et-vient dans le tube 2. Les espèces activées qui se présentent dans cette zone de dépôt émettent un rayonnement caractéristique de la réaction conduisant au dépôt, rayonnement qui se situe dans le domaine allant du bleu au proche ultra-violet.

On notera que la taille de la zone de dépôt 54, sur la figure 2 comme sur la figure 1, a été exagérée pour mieux mettre en évidence cette zone 54.

Sur la figure 2, on a également représenté les variations de l'intensité i du rayonnement caractéristique, en fonction de la position sur l'axe z du tube. L'intensité i est sensiblement nulle partout sauf dans le domaine correspondant à la zone de dépôt où cette intensité i prend la forme d'un pic qui reproduit effectivement, à une homothétie près, la forme du profil de la zone de dépôt vue en coupe. La largeur à mi-hauteur l de ce pic est une très bonne approximation de la largeur réelle de la zone de dépôt 54 ( à une homothétie près).

Dans l'exemple de réalisation illustré par la figure 1, le capteur optique 50 est un capteur comportant une pluralité d'éléments photosensibles : il comprend un dispositif à transfert de charges 56 en forme de barrette, qui est plus simplement appelé par la suite "barrette CCD", ainsi qu'une carte ou système de commande 58 de la barrette 56. Cette barrette est fixe et placée en regard de la fente 48, parallèlement à l'axe du tube (qui est lui-même parallèle à l'axe du four 40), et à une distance appropriée de cette fente pour pouvoir observer la zone utile du tube à travers une optique appropriée 60 qui est par exemple un objectif d'appareil photographique.

En outre, deux filtres 62 et 64 sont prévus devant l'objectif 60, respectivement pour arrêter le rayonnement infrarouge du four et pour arrêter les rayonnements visibles de longueurs d'ondes inférieures à celle du rayonnement bleu, pour que seul le rayonnement caractéristique parvienne à la barrette CCD.

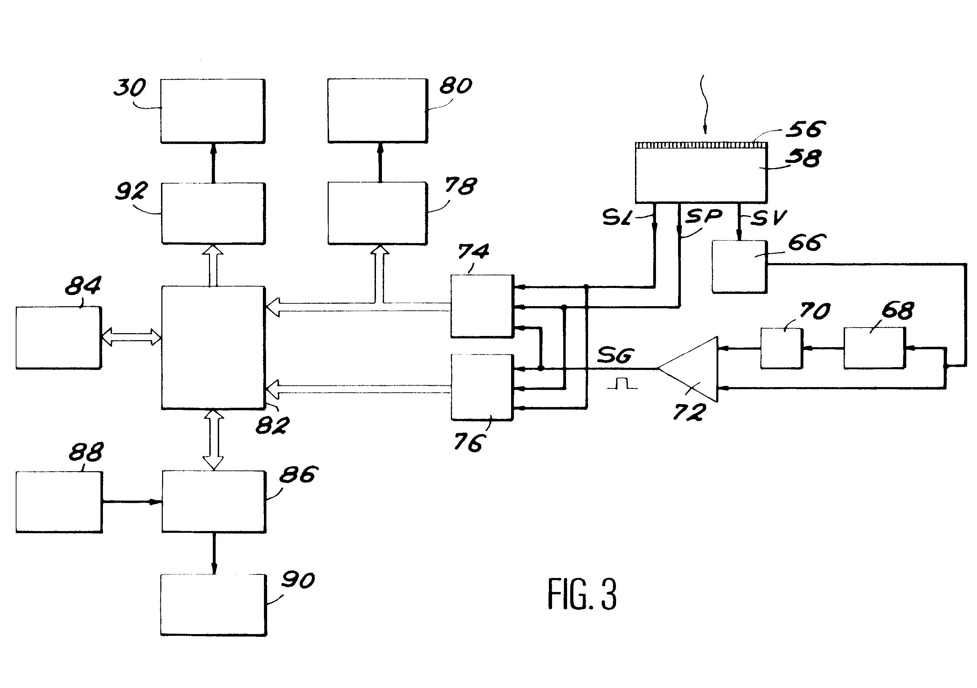

Sur la figure 3, on a représenté schématiquement les moyens électroniques de régulation 52 utilisés avec la barrette CCD 56. Dans ces moyens de régulation 52, le signal vidéo SV fourni par la carte 58 qui est associée à la barrette 56 est d'abord soumis à un filtrage analogique au moyen d'un filtre passe-bas 66 dont la fréquence de coupure est par exemple de l'ordre de 500 kHz, afin d'éliminer du signal vidéo le "bruit" dû à l'échantillonnage résultant de la barrette CCD.

Le signal vidéo ainsi filtré est envoyé à l'entrée de moyens 68 de détection de l'amplitude maximale de ce signal vidéo, moyens 68 dont la sortie est reliée à l'entrée de moyens diviseurs 70 aptes à fournir en sortie un signal de seuil dont l'amplitude est égale à la moitié de l'amplitude maximale du signal vidéo.

La carte 58 fournit, sous forme électrique, une succession d'images résultant du balayage électronique de la barrette CCD. L'ensemble de ces images constitue le signal vidéo. L'amplitude maximale de ce signal vidéo ne varie pratiquement pas d'une image à l'autre. Aussi le signal de seuil relatif à chaque image est-il envoyé à une première entrée d'un comparateur 72 dont l'autre entrée reçoit le signal vidéo relatif à l'image suivante. Celle-ci est comparée au signal de seuil en question dans le comparateur 72 qui fournit en sortie un signal TTL en forme d'impulsion rectangulaire SG (figure 4) pour ladite image.

La carte 58 associée à la barrette CCD fournit également un signal TTL de synchronisation-ligne SL (figure 4) ainsi qu'un signal TTL de synchronisation-point SP (figure 4). Ce signal de synchronisation-point est un signal en forme de créneau qui passe à l'état logique 1 à chaque fois qu'un photodétecteur ou "point" de la barrette CCD est lu.

Le signal de synchronisation-ligne est un signal périodique, de période T, qui est à l'état logique 1 pendant le temps de lecture d'une image.

Les moyens électroniques de régulation représentés sur la figure 3 comprennent aussi un premier compteur 74 et un second compteur 76 qui reçoivent tous deux en entrée les signaux SL, SP et SG.

Le premier compteur 74 est prévu pour compter le nombre d'états logiques 1 du signal de synchronisation-point (nombre de transitions 0 vers 1 ou nombre de transistors 1 vers 0 de ce signal) à partir du moment où le signal de synchronisation-ligne passe à l'état logique 1 jusqu'au moment où le signal issu du comparateur passe de l'état logique 0 à l'état logique 1. La lecture du premier compteur 74 fournit ainsi le numéro de l'élément photosensible ou photodétecteur de la barrette CCD où commence la zone de dépôt à l'instant considéré.

Le second compteur 76 est prévu pour compter le nombre d'états logiques 1 du signal de synchronisation-point entre le moment où le premier compteur 74 s'arrête de compter et le moment où le signal issu du comparateur repasse à l'état logique 0. La lecture du second compteur fournit donc la largeur à mi-hauteur de la zone de dépôt.

A titre purement indicatif et nullement limitatif, la lecture de la barrette CCD s'effectue de gauche à droite sur la figure 1 de sorte que le premier compteur permet de repérer le front de la colonne de plasma.

Dans les moyens électroniques de régulation représentés sur la figure 3, l'information de position du front de la colonne de plasma (donnant la position de la zone de dépôt) et l'information de largeur de cette zone de dépôt sont actualisés à chaque image fournie par la barrette CCD, par l'intermédiaire de la carte 58.

L'information donnée par le premier compteur 74 ou compteur de position, pilote un convertisseur numérique-analogique 78 de façon à pouvoir disposer d'un signal analogique donnant la position du front de la colonne de plasma. Le convertisseur 78 est relié à des moyens de visualisation tels qu'un oscilloscope 80, afin de pouvoir contrôler visuellement cette position du front de la colonne de plasma.

Les moyens électroniques de régulation représentés sur la figure 3 comprennent également un microprocesseur 82 qui lit les compteurs 74 et 76 et qui est associé à des moyens de mémorisation 84 (RAM et ROM) ainsi qu'à un micro-ordinateur 86 muni d'organes d'entrée de données 88 (par exemple un clavier) et d'organes de sortie 90, tels qu'un moniteur vidéo par exemple, permettant la visualisation de différentes informations.

Le microprocesseur utilise les informations qu'il lit sur le compteur 74 pour élaborer, sous forme numérique, une tension de commande du générateur de micro-ondes 30. Cette tension numérique est convertie en un signal de tension analogique par un convertisseur numérique-analogique 92 dont la sortie commande le générateur 30.

Le micro-ordinateur 86 permet de fournir au microprocesseur 82 (ou plus exactement de mettre dans la mémoire 84 associée à celui-ci) différents paramètres de commande du dispositif de la figure 1, par exemple les positions repérées par les lettres a et b sur la figure 1.

Le microprocesseur 82 est commandé par un programme qui comprend des instructions d'interprétation de commandes issues du micro-ordinateur, d'exécution de ces commandes et de gestion des périphériques du microprocesseur, ainsi qu'un sous-programme qui constitue un algorithme d'asservissement et permet d'élaborer la tension de commande du générateur de micro-ondes.

Cet algorithme d'asservissement utilise une méthode du genre de la méthode de LAGRANGE ou méthode des parties proportionnelles pour trouver le zéro d'une fonction. Selon cette méthode, l'abscisse pour laquelle la fonction s'annule est la limite d'une suite d'abscisses, chaque terme de la suite correspondant à l'intersection de l'axe des abscisses avec la tangente au graphe de la fonction en le point ayant pour abscisse le terme précédent de la suite.

Dans le dispositif représenté sur la figure 1, la régulation peut être effectuée soit en boucle ouverte, soit en boucle fermée.

En ce qui concerne la régulation en boucle fermée, on forme dans la mémoire associée au microprocesseur un tableau de positions respectivement associées à diverses positions du front de la colonne de plasma dans le tube, ce tableau étant défini par une position minimale Xmin et une position maximale Xmax et par le nombre total de positions dans le tableau, ces positions étant espacées d'un pas constant les unes des autres. On fournit également au microprocesseur la fréquence à laquelle ce tableau doit être parcouru. Pour la régulation en boucle fermée, le microprocesseur parcours le tableau de positions à la fréquence souhaitée, de Xmin à Xmax, puis de Xmax à Xmin puis à nouveau de Xmin à Xmax et ainsi de suite, ce qui correspond au balayage du tube par la colonne de plasma, et pour chacune de ces positions successives X, le microprocesseur calcule au moyen de l'algorithme, la tension de commande du générateur qui permet d'aboutir effectivement à cette position X. Plus précisément, le microprocesseur élabore une tension de commande qui donne une certaine position XR pour le front de la colonne de plasma; cette position est déterminée grâce à la barrette CCD et le microprocesseur compare cette position réelle XR à la position voulue X et augmente -ou diminue- la tension de commande si XR est inférieur -ou supérieur- à X et ainsi de suite jusqu'à ce qu'il y ait coïncidence (avec une précision imposée) entre X et XR.

En ce qui concerne la régulation en boucle ouverte, on forme également dans la mémoire du microprocesseur le tableau de positions mentionné plus haut ainsi qu'un tableau de tensions comprenant une suite de tensions respectivement associées aux positions du tableau de positions. Le tableau de tensions est formé avant l'utilisation effective du dispositif représenté sur la figure 1 avec, dans ce dispositif, un tube uniquement destiné au réglage de celui-ci : le microprocesseur cherche également pour chaque position X du tableau de positions la tension à appliquer au générateur de micro-ondes pour obtenir effectivement cette position X, par approximations successives au moyen du programme d'asservissement, comme on l'a déjà expliqué plus haut.

Lorsque les deux tableaux sont obtenus, l'utilisation effective du dispositif représenté sur la figure 1 peut commencer: un tube étant prêt à être traité dans le dispositif, le microprocesseur parcourt le tableau des tensions à la fréquence souhaitée de la tension minimale Vmin à la tension maximale Vmax puis de Vmax à Vmin puis à nouveau de Vmin à Vmax et ainsi de suite.

L'oscilloscope 80 permet de contrôler si le déplacement du front de la colonne de plasma est effectivement linéaire. On doit observer un déplacement dont l'évolution temporelle est du genre de celle qui est représentée sur la figure 5-A.

Si les valeurs XR des positions réelles sont différentes des valeurs X des positions souhaitées du fait d'une dérive au cours du temps de l'un ou l'autre des paramètres qui gouvernent le fonctionnement du dispositif, on interrompt le dépôt et l'on refait le tableau des tensions pour les mêmes valeurs de position qui sont fixées dans le tableau des positions.

L'algorithme de calcul est fait de façon à minimer le nombre d'itérations permettant d'aboutir à la bonne tension de commande : ce nombre d'itérations est inférieur ou égal à 4.

La régulation en boucle ouverte est préférée à la régulation en boucle fermée pour une question de rapidité. En effet, une fréquence de balayage du tube 2 de l'ordre de 10 Hz est possible avec une régulation en boucle ouverte, alors qu'avec une régulation en boucle fermée, la fréquence de balayage du tube ne peut guère dépasser 1 Hz. Il faut cependant noter que les fréquences de balayage possibles dépendent du nombre de points du tableau de positions et donc de la précision souhaitée par les utilisateurs pour l'épaisseur du revêtement du tube. A titre purement indicatif et nullement limitatif, pour un revêtement interne de 50 cm de longueur, le tableau de positions peut comprendre 150 valeurs.

De façon préférentielle, on peut réaliser un dispositif commandé par un micro-processeur qui fait une acquisition périodique de la courbe des positions réelles du front de la colonne de plasma en fonction du temps (positions qui, dans le dispositif de la figure 1, sont visibles sur l'oscilloscope 80) et qui fait si nécessaire, par exemple si l'écart entre les positions réelles et les positions voulues aux mêmes instant dépasse 5%, le rafraîchissement du tableau des tensions de commande. Pour le démarrage de l'opération de revêtement, le tableau de tension initial peut être choisi arbitrairement étant entendu qu'il doit être compatible avec la longueur du tube à revêtir intérieurement.

Au cours de la modulation de la puissance microondes, une variation de largeur de la zone de dépôt est observée. En effet, l'augmentation du volume de la décharge (colonne de plasma) crée par effet thermique, une augmentation de la pression dans le tube. Il en résulte une diminution de la largeur de la zone de dépôt au fur et à mesure du déplacement du front de la colonne de plasma. L'évolution de la pression Pr dans le tube en fonction de la longueur de cette colonne est représentée sur la figure 6 qui suppose le dispositif de la figure 1 observé de telle manière que la circulation du mélange gazeux ait lieu de la droite vers la gauche (contrairement aux cas des figures 1 et 2). La courbe des variations de Pr en fonction de la position Z du front de la colonne de plasma comporte une zone PP correspondant à la pression en aval de la vanne 26, au niveau des moyens de pompage 24 puis augmente de façon sensiblement linéaire à partir du point J (qui correspond à la vanne 26) et présente ensuite un palier puis une discontinuité en l'extrémité 6 du tube 2 où le mélange gazeux est introduit avec une pression P1 qui dans l'exemple décrit est sensiblement égale à la pression atmosphérique (de l'ordre de $10_5$ Pa). On observe que la pression augmente lorsque le front de la colonne de plasma se déplace vers l'extrémité 6 du tube 2 à partir d'une position Z1 jusqu'à une position Z2.

La pression mesurée par de la jauge 22 varie, sur une période de modulation de la puissance des micro-ondes, de quelques centaines de Pa, ce qui induit des variations de largeur de la zone de dépôt de l'ordre de 1 à 2 cm et donc une inhomogénéité d'épaisseur sur la longueur, inhomogénéité qui est estimée à environ 10%. Pour maintenir la largeur de dépôt à une valeur sensiblement constante, on peut visualiser celle-ci sur le moniteur vidéo 90 par exemple, et agir de façon appropriée sur la vanne 26 de réglage d'aspiration de la pompe 24 pour maintenir la largeur de la zone de dépôt à la valeur constante souhaitée, l'ouverture de la vanne 26 devant être augmentée lorsque la largeur de la zone de dépôt diminue et au contraire diminuée lorsque cette largeur augmente.

A titre purement indicatif et nullement limitatif, on donne dans ce qui suit un exemple d'utilisation du dispositif représenté sur la figure 1.

Dans cet exemple, les diamètres intérieur et extérieur du tube-substrat 2 sont respectivement de 19 mm et 25 mm. La température du four est maintenue, par régulation, à 1150°C. Dans une phase préliminaire, le mélange gazeux est composé d'argon pur avec un débit de 100 sccm (centimètres cubes standards par minute) et un plasma d'argon est formé pendant environ 15 mm, ce qui permet une désorption très efficace des parois internes du tube. Ensuite, la composition du mélange gazeux est la suivante : 800 sccm d'oxygène, 200 sccm de $SiCl_4$ et de 0 à 30 sccm de $GeCl_4$. La pression en amont de la vanne 26 est maintenue constante à environ 500 Pa au moyen de cette vanne 26. La fréquence de modulation de la puissance des micro-ondes est de 0,2 Hz, ce qui correspond à un dépôt de deux couches élémentaires de revêtement vitreux en 5 secondes. On forme ainsi environ 2400 couches élémentaires ayant chacune 0,25 micromètre d'épaisseur, ce qui correspond à un dépôt total de 53 grammes en 100 minutes.

Le signal de consigne triangulaire qui est en fait mémorisé dans la mémoire associée au microprocesseur 82 sous la forme du tableau des positions, associé à la fréquence imposée pour le parcours de ce tableau, permet une modulation asservie de la puissance micro-onde entre 300 et 2500 W. Le déplacement résultant de la zone de dépôt est compris entre 20 centimètres et 70 centimètres par rapport au coupleur hyperfréquence 4, d'où un dépôt de 50 centimètres de longueur dans le tube 2 dont la longueur totale est choisie en conséquence. La précision sur la position de la zone de dépôt est d'environ 0,3 millimètre.

La perte de charge est de 50 Pa, soit une perte de charge de 5% sur la longueur du dépôt, ce qui correspond à une variation de la largeur de la zone de dépôt d'environ 5% pour une largeur de 6 cm, soit 0,3 centimètre.

Lorsque la phase du dépôt de revêtement vitreux est terminée le tube est rétreint sur un tour de verrier. La préforme obtenue a un diamètre de 18 mm et une longueur de 50 cm, c'est-à-dire une capacité kilométrique de 10 kilomètres de fibres ayant un diamètre extérieur de 125 micromètres et un diamètre de coeur de 50 micromètres. Sur une longueur supérieure à 75% de la longueur totale de la fibre (10 kilomètres) l'écart sur le diamètre de coeur est de ±1 micromètre et de ± 3 micromètres sur 90% de ces 10 kilomètres.

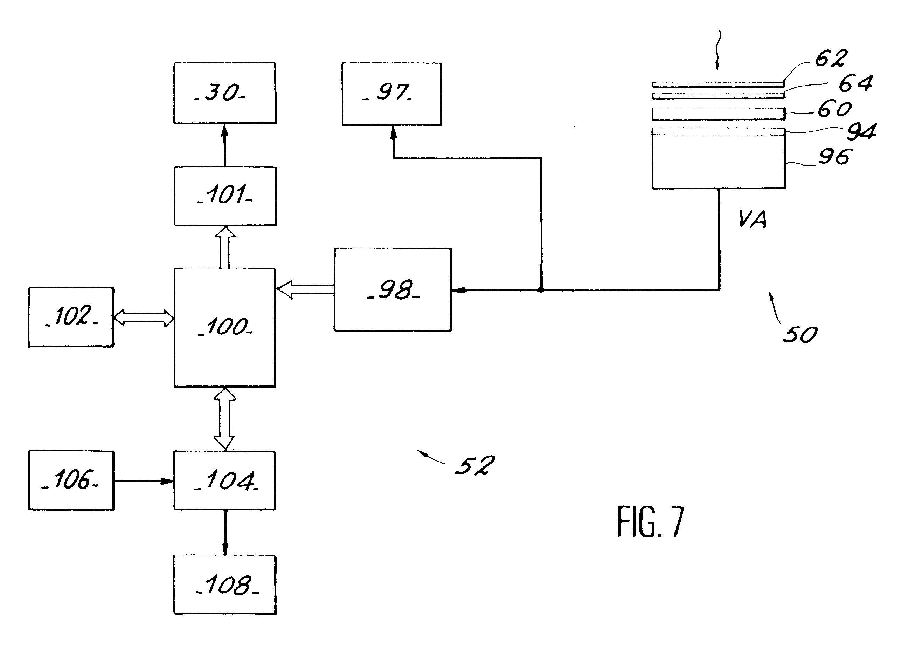

La figure 7 illustre schématiquement d'autres moyens électroniques de régulation 52 utilisés dans un autre dispositif conforme à l'invention. Cet autre dispositif diffère simplement de celui qui est représenté sur la figure 1 par le fait que la barrette CCD 56 est remplacée par un capteur linéaire photosensible à un seul élément photosensible 94 associé à une carte électronique 96. Cet élément 94 a une longueur comparable à celle de la barrette CCD, par exemple 30 mm, et, à titre purement indicatif et nullement limitatif, peut être du genre de celui qui est commercialisé par la société SITEK sous la référence 1L30. L'élément 94 est bien entendu fixe, parallèle à la fente 48 et associé à l'optique 60 et aux filtres 62 et 64.

L'élément 94 fournit, par l'intermédiaire de la carte 96, une tension analogique VA proportionnelle à la position de la zone de dépôt. Cette tension analogique est envoyée à l'entrée de moyens de visualisation 97 permettant un contrôle visuel de la position du front de la colonne de plasma.

Cette tension analogique VA est également envoyée à l'entrée de moyens 98 de conversion analogique-numérique où elle est numérisée puis envoyée à l'entrée d'un microprocesseur 100 (homologue du microprocesseur 82 de la figure 3) qui élabore sous forme numérique une tension de commande du générateur de micro-ondes 30. Cette tension numérique est convertie en un signal de tension analogique par un convertisseur numérique-analogique 101 dont la sortie commande le générateur 30.

Le microprocesseur 100 est associé à des moyens de mémorisation 102 (homologues des moyens 84) et à un micro-ordinateur 104 (homologue du micro-ordinateur 86), lui-même associé à des organes d'entrée 106 et de sortie 108 (respectivement homologues des organes 88 et 90).

Dans une variante non représentée du dispositif décrit en référence à la figure 1, on utilise un capteur optique mobile et non plus fixe, ainsi que des moyens mécaniques appropriés pour faire subir à ce capteur des va-et-vient à vitesse constante le long de la fente du four, et l'on agit sur la puissance micro-onde pour que le front de la colonne de plasma demeure constamment en regard du capteur mobile. Ce dernier peut comprendre au moins deux photodétecteurs rigidement solidaires l'un de l'autre et aligné parallèlement à la fente, ou une barrette CCD également parallèle à cette fente. On agit sur la puissance micro-onde pour que le front de la colonne de plasma soit constamment compris entre les deux photodétecteurs solidaires, ou entre les deux photodétecteurs d'extrémité de la barrette CCD.

## Revendications

1. Dispositif de fabrication de préformes pour fibres optiques, comprenant des moyens pour déposer sur la face interne d'un tube en verre (2) un revêtement vitreux destiné à la formation ultérieure du coeur des fibres optiques, ces moyens comprenant :

des moyens (16, 24) pour faire passer continûment, d'une première extrémité (6) du tube à la seconde extrémité (8) de celui-ci, un mélange de composés gazeux ionisables et aptes à donner naissance au revêtement par réaction entre eux,

un coupleur hyperfréquence (4) situé du côté de la seconde extrémité (8) du tube et prévu pour former dans ce tube une colonne de plasma (34) destinée à activer la réaction, ce coupleur hyperfréquence étant apte à injecter une onde progressive de surface dans la colonne de plasma, et

un générateur de micro-ondes (30) à puissance variable, prévu pour fournir au coupleur hyperfréquence (4) une puissance électromagnétique et pour faire varier continûment et progressivement cette puissance, de façon que l'extrémité (38) de la colonne de plasma (34) balaye le tube, le dépôt de revêtement vitreux ayant lieu, à un instant donné, dans une zone de dépôt (54) qui émet une lumière caractéristique de la réaction et qui est située dans la colonne de plasma, au voisinage de l'extrémité de celle-ci,

dispositif caractérisé en ce qu'il comprend en outre :

des moyens de photodétection (50) qui sont sensibles à cette lumière et qui sont aptes à fournir des informations relatives à la position de la zone de dépôt, et

des moyens électroniques (52) de régulation du déplacement de la zone de dépôt, ce déplacement étant tel que l'épaisseur du revêtement soit uniforme, les moyens de régulation étant prévus pour commander la puissance du générateur (30) en fonction des informations fournies par les moyens de photodétection (50).

2. Dispositif selon la revendication 1, caractérisé en ce que les moyens de photodétection (50) sont fixes par rapport au coupleur hyperfréquence (4), sont prévus pour observer les positions successives de la zone de dépôt (54) lorsque l'extrémité de la colonne de plasma balaye le tube et sont aptes à fournir des signaux électriques qui rendent compte de ces positions successives.

3. Dispositif selon la revendication 2, caractérisé en ce que les moyens (50) de photodétection comprennent un capteur linéaire photosensible (56, 94) disposé parallèlement à l'axe du tube (2) et muni de moyens de filtrage optique (62, 64) prévus pour ne laisser passer que la lumière caractéristique de la réaction.

4. Dispositif selon la revendication 3, caractérisé en ce que ce dispositif comprenant en outre un four (40) qui est prévu pour porter le tube (2) à une température au moins égale à 1000°C environ, ce four comporte une fente longitudinale (48) permettant d'observer le déplacement de la zone de dépôt depuis l'extérieur du four, cette fente s'étendant parallèlement à l'axe du tube, et en ce que le capteur linéaire photosensible (56, 94) est muni d'une optique (60) et placé en dehors du four, en regard de la fente et à une distance appropriée de celle-ci pour repérer lesdites positions successives.

5. Dispositif selon la revendication 4, caractérisé en ce que le capteur linéaire photosensible (94) comprend un seul élément photosensible du type capteur de position, où seule une petite zone de cet élément est excitée à la fois par la lumière caractéristique de la réaction.

6. Dispositif selon l'une quelconque des revendications 3 et 4, caractérisé en ce que le capteur linéaire photosensible (56) comprend une pluralité d'éléments photosensibles, seul un groupe d'éléments photosensibles adjacents étant excité à la fois par la lumière caractéristique.

7. Dispositif selon la revendication 6, caractérisé en ce que le capteur linéaire photosensible est un capteur à transfert de charges (56) qui est en forme de barrette.

8. Dispositif selon l'une quelconque des revendications 6 et 7, caractérisé en ce que les moyens de régulation (52) comprennent :

des moyens (66) de filtrage des signaux fournis par les moyens de photodétection (50),

des moyens de détermination (68, 70, 72, 74, 76) prévus pour repérer à partir de ces signaux filtrés, un élément photosensible d'extrémité pour chaque groupe successivement excité, et

des moyens de traitement (82) aptes à imposer au générateur de micro-ondes (30), à partir des éléments photosensibles d'extrémité ainsi repérés, une tension de commande dont l'évolution temporelle provoque le déplacement de la zone de dépôt (54) conduisant à l'épaisseur uniforme de revêtement.

9. Dispositif selon la revendication 8, caractérisé en ce que les moyens de détermination comprennent :

des moyens (68, 70, 72) de conversion du signal lumineux correspondant à la lumière caractéristique, en une impulsion électrique rectangulaire (SG) dont la largeur temporelle du niveau haut est proportionnelle à la largeur à mi-hauteur dudit signal lumineux, et

des moyens de comptage (74) prévus pour déterminer ledit élément photosensible d'extrémité à partir de l'impulsion électrique rectangulaire (SG).

10. Dispositif selon l'une quelconque des revendications 8 et 9, caractérisé en ce que les moyens de détermination (68, 70, 72, 74, 76) sont en outre prévus pour fournir une information permettant de déterminer la largeur de la zone de dépôt (54) à un instant donné.

11. Dispositif selon les revendications 9 et 10, caractérisé en ce que les moyens de détermination comprennent en outre d'autres moyens de comptage (76) prévus pour déterminer le nombre d'éléments photosensibles du groupe excité, à partir de la largeur temporelle du niveau haut de l'impulsion rectangulaire (SG).

12. Dispositif selon l'une quelconque des revendications 1 à 11, caractérisé en ce que la régulation est une régulation en boucle fermée, les informations fournies par les moyens de photodétection (50) étant traitées et comparées en permanence dans les moyens électroniques de régulation (52), à des informations de position initialement mémorisées dans ces moyens électroniques de régulation.

13. Dispositif selon l'une quelconque des revendications 1 à 11, caractérisé en ce que la régulation est une régulation en boucle ouverte, les informations fournies par les moyens de photodétection (50) étant utilisées au moins initialement par les moyens électroniques de régulation (52) pour déterminer une série de tensions de commande appropriées du générateur de micro-ondes (30).

14. Dispositif selon l'une quelconque des revendications 1 à 11, caractérisé en ce que la régulation est une régulation en boucle ouverte, les informations fournies par les moyens de photodétection (50) étant utilisées par les moyens électroniques de régulation (52) pour rafraîchir périodiquement une série de tensions de commande du générateur de micro-ondes (30), mémorisée dans les moyens électroniques de régulation (52).

15. Dispositif selon l'une quelconque des revendications 1 à 14, caractérisé en ce que les moyens électroniques de régulation (52) sont prévus pour permettre un déplacement de la zone de dépôt (54) à vitesse constante.

**Patentansprüche**

1. Vorrichtung zur Herstellung von Vorformen für optische Faser, enthaltend Einrichtungen zum Abscheiden auf der Innenfläche eines Glasrohres (2) einer glasförmigen Schicht, die schließlich zur Ausbildung des Kerns optischer Fasern bestimmt ist, enthaltend:

Einrichtungen (16, 24) zum: kontinuierlichen Durchleiten von einem ersten Ende (6) des Rohres zum zweiten Ende (8) desselben eines Gemischs ionisierbarer gasförmiger Verbindungen, die dazu geeignet ist, durch Reaktion untereinander die Schicht entstehen zu lassen,

einen Höchstfrequenzkoppler (4), der auf Seiten des zweiten Endes (8) des Rohres angeordnet ist und dazu dient, in dem Rohr eine Plasmasäule (37) auszubilden, die der Aktivierung der Reaktion dient, wobei dieser Höchstfrequenzkoppler dazu geeignet ist, eine Oberflächenwanderwelle in die Plasmasäule zu injizieren, und

einen Mikrowellengenerator (30) variabler Leistung, der dazu dient, den Höchstfrequenzkoppler (4) mit einer elektromagnetischen Energie zu versorgen und um diese Energie kontinuierlich und fortschreitend derart zu verändern, daß das Ende (38) der Plasmasäule (34) das Rohr überstreicht, wobei der Niederschlag der glasförmigen Schicht zu einem. gegebenen Zeitpunkt in einer Abscheidezone (34) stattfindet, die ein Licht abgibt, das charakteristisch für die Reaktion ist, und die in der Plasmasäule benachbart dem Ende derselben liegt,

**dadurch gekennzeichnet,** daß sie weiterhin enthält:

Photodetektoreinrichtungen (50), die auf dieses Licht empfindlich sind und dazu dienen, Informationen über die Position der Abscheidezone zu liefern, und

elektronische Einrichtungen (52) zum Regeln der Verstellung der Abscheidezone, wobei diese Verstellung derart ist, daß die Dicke der Schicht gleichförmig wird, wobei die Regeleinrichtungen dazu dienen, die Leistung des Generators (30) in Abhängigkeit von Informationen zu beeinflussen, die von den Photodetektoreinrichtungen (50) geliefert werden.

2. Vorrichtung nach Anspruch 1, **dadurch gekennzeichnet,** daß die Photodetektoreinrichtungen (50) gegenüber dem Höchstfrequenztkorpler (4) festgelegt sind und dazu dienen, die aufeinanderfolgenden Positionen der Abscheidezone (54) zu beobachten, und das Ende der Plasmasäule das Rohr überstreicht, und dazu dienen, elektrische Signale zu liefern, die Aussagen über diese aufeinanderfolgenden Positionen liefern.

3. Vorrichtung nach Anspruch 2, **dadurch gekennzeichnet,** daß die Photodetektoreinrichtungen (50) einen linearen photoempfindlichen Wandler (56, 94) enthalten, der parallel zur Rohrachse (2) angeordnet ist und mit optischen Filtereinrichtungen (62, 64) versehen ist, die nur das für die Reaktion charakteristische Licht durchlassen.

4. Vorrichtung nach Anspruch 3, **dadurch gekennzeichnet,** daß diese Vorrichtung weiterhin einen Ofen (40) enthält, der dazu dient, das Rohr (2) auf einer Temperatur zu halten, die wenigstens gleich etwa 1000°C ist, und daß dieser Ofen einen Längsschlitz (48) aufweist, der die Beobachtung der Verstellung der Abscheidezone vom Ende des Ofens erlaubt, wobei sich dieser Schlitz parallel zur Rohrachse erstreckt, und daß der lineare photoempfindliche Wandler (56, 94) mit einer Optik (60) versehen und außerhalb des Ofens dem Schlitz gegenüber und in einer geeigneten Distanz zu diesem angeordnet ist, um die genannten aufeinanderfolgenden Positionen zu erfassen.

5. Vorrichtung nach Anspruch 4, **dadurch gekennzeichnet,** daß der lineare photoempfindliche Wandler (94) ein einziges photoempfindliches Element vom Positionswandlertyp enthält, wo allein eine kleine Zone dieses Elements gleichzeitig durch das für die Reaktion charakteristische Licht erregt wird.

6. Vorrichtung nach einem der Ansprüche 3 und 4, **dadurch gekennzeichnet,** daß der lineare photoempfindliche Wandler (56) mehrere photoempfindliche Elemente enthält, wobei nur eine Gruppe benachbarter photoempfindlicher Elemente gleichzeitig durch das charakteristische Licht erregt wird.

7. Vorrichtung nach Anspruch 6, **dadurch**

**gekennzeichnet**, daß der lineare photoempfindliche Wandler ein Ladungsverschiebungswandler (56) ist, der die Form eines Stabes hat.

8. Vorrichtung nach einem der Ansprüche 6 und 7, **dadurch gekennzeichnet**, daß die Regeleinrichtungen (52) enthalten:

Einrichtungen (66) zum Filtern der von den Photodetektoreinrichtungen (50) gelieferten Signale,

Bestimmungseinrichtungen (68, 70, 72, 74, 76) zum Erfassen eines photoempfindlichen Endelements für jede nacheinander erregte Gruppe aus diesen gefilterten Signalen, und

Verarbeitungseinrichtungen (82), die dazu eingerichtet sind, mit Hilfe der so ermittelten photoempfindlichen Endelemente dem Mikrowellengenerator (30) eine Steuerspannung zuzuführen, deren zeitliche Entwicklung die Verstellung der Abscheidezone (54) hervorruft, was zu einer gleichförmigen Beschichtungsdicke führt.

9. Vorrichtung nach Anspruch 8, **dadurch gekennzeichnet**, daß die Bestimmungseinrichtungen enthalten:

Einrichtungen (68, 70, 72) zum Umwandeln des dem charakteristischen Licht entsprechenden Lichtsignals in einen elektrischen Rechteckimpuls (SG), dessen zeitliche Länge des hohen Pegels proportional des Mittelwerts des genannten Lichtsignals ist, und

Zähleinrichtungen (54), die dazu dienen, das photoempfindliche Endelement mit Hilfe des elektrischen Rechteckimpulses (SG) zu ermitteln.

10. Vorrichtung nach einem der Ansprüche 8 und 9, **dadurch gekennzeichnet**, daß die Bestimmungseinrichtungen (68, 70, 72, 74, 76) weiterhin dazu dienen, eine Information zu liefern, die die Ermittlung der Größe der Abscheidezone (54) zu einem gegebenen Zeitpunkt ermöglicht.

11. Vorrichtung nach den Ansprüchen 9 und 10, **dadurch gekennzeichnet**, daß die Bestimmungseinrichtungen außerdem weitere Zähleinrichtungen (76) enthalten, die dazu dienen, die Anzahl der photoempfindlichen Elemente der erregten Gruppe aus der zeitlichen Länge des hohen Pegels des Rechteckimpulses (SG) zu ermitteln.

12. Vorrichtung nach einem der Ansprüche 1 bis 11, **dadurch gekennzeichnet**, daß die Regelung eine Regelung mit geschlossener Schleife ist, wobei die durch die Photodetektoreinrichtungen (50) gelieferten Informationen verarbeitet und ständig in den elektronischen Regeleinrichtungen (52) mit den Positionsinformationen verglichen werden, die zu Anfang in diesen elektronischen Regeleinrichtungen gespeichert sind.

13. Vorrichtung nach einem der Ansprüche 1 bis 11, **dadurch gekennzeichnet**, daß die Regelung eine Regelung mit offener Schleife ist, wobei die von den Photodetektoreinrichtungen (50) gelieferten Informationen wenigstens anfänglich von den elektronischen Regeleinrichtungen (52) dazu verwendet werden, eine Serie von Steuerspannumgen zu bestimmen, die für den Mikrowellengenerator (30) geeignet sind.

14. Vorrichtung nach einem der Ansprüche 1 bis 11, **dadurch gekennzeichnet**, daß die Regelung eine Regelung mit offener Schleife ist, wobei die von den Photodetektoreinrichtungen (50) gelieferten Informationen von den elektronischen Regeleinrichtungen (52) dazu verwendet werden, eine Serie von Steuerspannungen für den Mikrowellengenerator (30), die in den elektronischen Regeleinrichtungen (52) gespeichert ist, periodisch zu erneuern.

15. Vorrichtung nach einem der Ansprüche 1 bis 14, **dadurch gekennzeichnet**, daß die elektronischen Regeleinrichtungen (52) dazu eingerichtet sind, eine Verstellung der Abscheidezone (54) mit konstanter Geschwindigkeit zu ermöglichen.

**Claims**

1. Apparatus for the production of preforms for optical fibres comprising means for depositing on the inner surface of a glass tube (2) a vitreous coating serving for the subsequent formation of the core of the optical fibres, said means comprising:

means (16, 24) for continuously passing from a first end (6) of the tube to the second end (8) of the tube, a mixture of ionizable gaseous compounds able to bring about the formation of the coating by reacting with one another,

an ultra-high frequency coupler (4) located on the side of the second end (8) of the tube and provided for forming in said tube a plasma column (34) for activating the reaction, said ultra-high frequency coupler being able to inject a travelling surface wave into the plasma column, and

a variable power microwave generator (30) for supplying the ultra-high frequency coupler (4) with an electromagnetic power and for continuously and progressively varying said power, in such a way that the end (38) of the plasma column (34) sweeps the tube, the vitreous coating deposit taking place at a given time in a deposition zone (54) emitting a light characteristic of the reaction and which is located in the plasma column in the vicinity of the end thereof, characterized in that the apparatus also comprises:

photodetection means (50) sensitive to said light and able to supply information relative to the position of the deposition zone, and electronic means (52) for controlling the displacement of the deposition zone, said displacement being such that the thickness of the coating is uniform, control means being provided for controlling the power of the generator (30) as a function of information supplied by the photodetection means (50).

2. Apparatus according to claim 1, characterized in that the photodetection means (50) are fixed with respect to the ultra-high frequency coupler (4), observe the successive positions of the deposition area (54) when the end of the plasma column sweeps the tube and can supply electric signals taking account of these successive positions.

3. Apparatus according to claim 2, characterized in that the photodetection means (50) comprise a photosensitive linear sensor (56, 94) positioned parallel to the axis of tube (2) and provided with optical filtering means (62, 64) to only permit the passage of the light characteristic of the reaction.

4. Apparatus according to claim 3, characterized in that the apparatus also comprises a furnace (40) for raising the tube (2) to a temperature which is at least equal to approximately 1000°C, said furnace having a longitudinal slit (48) making it possible to observe the displacement of the deposition area from the outside of the furnace, said slit extending parallel to the tube axis and in that the photosensitive linear sensor (56, 94) is provided with optics (60) placed outside the furnace, facing the slit and at an appropriate distance therefrom to locate the said successive positions.

5. Apparatus according to claim 4, characterized in that the photosensitive linear sensor (94) comprises a single photosensitive element of the position sensor type, where only a small area of said element is excited at once by the light characterizing the reaction.

6. Apparatus according to either of the claims 3 and 4, characterized in that the photosensitive linear sensor (56) comprises a plurality of photosensitive elements, only one group of adjacent photosensitive elements being excited at once by the characteristic light.

7. Apparatus according to claim 6, characterized in that the photosensitive linear sensor is a charge coupled device (56) in the form of an array or strip.

8. Apparatus according to either of the claims 6 and 7, characterized in that the control means (52) comprise means (66) for filtering signals supplied by the photodetection means (50), determination means (68, 70, 72, 74, 76) for locating, on the basis of said filtered signals, a photosensitive end element for each successively excited group and processing means (82) able to impose on the microwave generator (30), on the basis of the thus located photosensitive end elements, a control voltage, whose time evolution brings about the displacement of the deposition area (54) leading to the uniform coating thickness.

9. Apparatus according to claim 8, characterized in that the determination means comprise means (68, 70, 72) for converting the light signal corresponding to the characteristic light into a rectangular pulse (SG), whose time width of the high level is proportional to the half-width of said light signal and counting means (74) for determining said end photosensitive element on the basis of the rectangular pulse (SG).

10. Apparatus according to either of the claims 8 and 9, characterized in that the determination means (68, 70, 72, 74, 76) are also provided for supplying an information making it possible to determine the width of the deposition area (54) at a given time.

11. Apparatus according to either of the claims 9 and 10, characterized in that the determination means comprise means (68, 70, 72) for converting the light signal corresponding to the characteristic light into a rectangular pulse (SG), whose time width of the high level is proportional to the half-width of said light signal, counting means (74) for determining said photosensitive end element on the basis of the rectangular pulse (SG) and other counting means (76) for determining the number of photosensitive elements of the excited group, on the basis of the time width of the high level of the rectangular pulse (SG).

12. Apparatus according to any one of the claims 1 to 11, characterized in that the control is a closed loop control, the information supplied by the photodetection means (50) being processed and compared on a permanent basis in electronic control means (52) with the position information initially stored in said electronic control means.

13. Apparatus according to any one of the claims 1 to 11, characterized in that the control is an open loop control, the information supplied by the photodetection means (50) being used, at least initially, by the electronic control means (52) for determining a series of appropriate control voltages of microwave generator (30).

14. Apparatus according to any one of the claims 1 to 11, characterized in that the control is an open loop control, the information supplied by the photodetection means (50) being used by the electronic control means (52) for periodically refreshing a series of control voltages of the microwave generator(30) stored in the electronic control means (52).

15. Apparatus according to any one of the claims 1 to 14, characterized in that the electronic control means (52) permit a displacement of the deposition area (54) at constant speed.

FIG. 1

$i$

$\ell$

$z$

$z$

**FIG. 2**

$SL$

$SP$

$SG$

$T$

**FIG. 4**

54

2

FIG. 3

FIG. 5

FIG. 6

FIG. 7

EP 0 333 580 B1